# EUROPÄISCHE PATENTANMELDUNG

(11) **EP 4 575 290 A1**
(43) Veröffentlichungstag der Anmeldung: **25.06.2025**
(21) Anmeldenummer: 24222011.9
(22) Anmeldetag: 20.12.2024
(51) Int. Cl.: F16L 11/12, F16L 11/11, F16L 59/153

(54) **MEHRSCHICHTIGER WELLROHRAUSSENMANTEL SOWIE DIESEN UMFASSENDE ROHRANORDNUNG**

(30) Priorität: 21.12.2023 DE 102023136175
(71) Anmelder: REHAU Industries SE & Co. KG, 95111 Rehau (DE)
(72) Erfinder: Kirsch, Stefan, 91560 Heilsbronn (DE); Meyer, Michael, 85072 Eichstätt (DE)

(57) **Zusammenfassung**

Die vorliegende Erfindung betrifft einen mehrschichtigen Wellrohraußenmantel (10) zur Aufnahme wenigstens eines Medienrohrs (100) zur Führung eines Fluids, der eine Innenschicht (20); eine auf der Innenschicht (20) angeordnete und mit der Innenschicht (20) zumindest abschnittsweise verbundene Verbindungsschicht (30); und eine auf der Verbindungsschicht (30) angeordnete, gewellte äußere Schutzschicht (40), die Wellrohrberge (41, 41') und Wellrohrtäler (42, 42') aufweist, wobei die Schutzschicht (40) im Bereich der Wellrohrtäler (42, 42') mit der Verbindungsschicht (30) verbunden ist, umfasst. Darüber hinaus bezieht sich die vorliegende Erfindung auf eine Rohranordnung (100), die einen erfindungsgemäßen mehrschichtigen Wellrohraußenmantel (10) und mindestens ein darin aufgenommenes Medienrohr (50) zur Führung eines Fluids umfasst.

## Beschreibung

Die vorliegende Erfindung betrifft einen mehrschichtigen Wellrohraußenmantel zur Aufnahme wenigstens eines Medienrohrs zur Führung eines Fluids. Darüber hinaus betrifft die vorliegende Erfindung eine Rohranordnung, einen solchen mehrschichtigen Wellrohraußenmantel und mindestens ein darin aufgenommenes Medienrohr zur Führung eines Fluids umfasst.

Wellrohraußenmäntel sind im Stand der Technik grundsätzlich bekannt und werden insbesondere in thermisch gedämmten Rohranordnungen beispielsweise in Nah- und Fernwärmenetzen eingesetzt. Beispielsweises sind einwandige flexible Kunststoffwellrohre am Markt erhältlich. Diese können durch Lagerung, Transport oder unvorsichtige Behandlung an der Baustelle leicht beschädigt werden, so dass Wasser von außen in das Wellrohr eindringen kann. Um diesen Nachteil zu begegnen, gibt es am Markt zweischichtige Wellrohraußenmäntel, bei denen in der gewellten Außenschicht ein Kunststoff-Inliner angeordnet ist. Solchen zweischichtigen Wellrohraußenmäntel neigen bereits weniger zu Beschädigungen auf der Baustelle. Dringt allerdings dennoch eine Beschädigung auf, so dass Wasser, beispielsweise in Form von Regen- oder Grundwasser in das Innere des Wellrohraußenmantels gelangt, ist nicht gewährleistet, dass ein Wärmeverteilsystem, das einen solchen Wellrohraußenmantel umfasst, nicht teilweise oder ganz voll Wasser läuft und auf diese Weise unbrauchbar wird, was nur unter hohem Aufwand behoben werden kann und mit hohen Kosten verbunden ist. Besonders hohe Sanierungskosten treten gerade dann auf, wenn durch das beschädigte Wärmeverteilsystem große Mengen Wasser unkontrolliert in ein Gebäude gelangen.

An dieser Stelle setzt die vorliegende Erfindung ein, der die Aufgabe zugrunde liegt, einen mehrschichtigen Wellrohraußenmantel zur Verfügung zu stellen, der die Nachteile des Stands der Technik zumindest teilweise überwindet. Insbesondere soll der erfindungsgemäße mehrschichtige Wellrohraußenmantel eine erhöhte Sicherheit gegenüber dem Eindringen von Wasser bei Beschädigung der äußeren Schicht bieten. Darüber hinaus soll die Biegeflexibilität eines typischen Wellrohres bei gleichzeitig hoher Ringsteifigkeit erhalten bleiben. Letztlich liegt die Aufgabe der vorliegenden Erfindung auch in der Bereitstellung einer Rohrananordnung, die einen derartigen mehrschichtigen Wellrohraußenmantel umfasst.

Diese und andere Aufgaben werden erfindungsgemäß durch einen mehrschichtigen Wellrohraußenmantel mit den Merkmalen des Anspruchs 1 bzw. durch eine Rohranordnung mit den Merkmalen des Anspruchs 10 gelöst. Bevorzugte Ausführungsformen des erfindungsgemäßen mehrschichtigen Wellrohraußenmantels sowie der erfindungsgemäßen Rohranordnung sind jeweils in den abhängigen Ansprüchen beschrieben.

Gemäß der vorliegenden Erfindung wurde erkannt, dass für einen mehrschichtigen Wellrohraußenmantel eine ausgewogene Balance aus wellrohrtypischer hoher Biegeflexibilität und gleichzeitig hoher Ringsteifigkeit dann erzielt wird, wenn der Wellrohraußenmantel dreischichtig aufgebaut ist, wobei die mittlere Schicht sowohl mit der Innenschicht als auch mit der gewellten äußeren Schutzschicht verbunden ist. Durch die Verbindung der mittleren Schicht mit dem äußeren Schutzmantel im Bereich von dessen Wellentälern ist gewährleistet, dass einmal durch den äußeren Schutzmantel gelangtes Wasser nicht in Längsrichtung des erfindungsgemäßen mehrschichtigen Wellrohraußenmantels weiter strömen werden kann. Dabei ist die Innenschicht vorzugsweise vollflächig mit der mittleren Schicht verbunden, insbesondere verschweißt oder verklebt, während die äußere Schicht unabhängig davon bevorzugt im Bereich der Wellrohrtäler umlaufend mit der mittleren Schicht verbunden ist, insbesondere verschweißt oder verklebt ist.

Dementsprechend liegt die vorliegende Erfindung in der Bereitstellung eines mehrschichtigen Wellrohraußenmantels zur Aufnahme wenigstens eines Medienrohrs zur Führung eines Fluids, der eine Innenschicht; eine auf der Innenschicht angeordnete und mit der Innenschicht zumindest abschnittsweise verbundene Verbindungsschicht; und eine auf der Verbindungsschicht angeordnete, gewellte äußere Schutzschicht, die Wellrohrberge und Wellrohrtäler aufweist, wobei die Schutzschicht im Bereich der Wellrohrtäler mit der Verbindungsschicht verbunden ist. Darüber hinaus stellt die vorliegende Erfindung eine Rohranordnung zur Verfügung, die einen erfindungsgemäßen mehrschichtigen Wellrohraußenmantel und mindestens ein darin aufgenommenes Medienrohr zur Führung eines Fluids umfasst.

In Bezug auf den erfindungsgemäßen mehrschichtigen Wellrohraußenmantel kann es günstig sein, wenn die Wandstärke der Schutzschicht im Bereich der Wellrohrberge größer ist als im Bereich der Wellrohrtäler. Es hat sich gezeigt, dass Beschädigungen des erfindungsgemäßen mehrschichtigen Wellrohraußenmantels durch andauernde hohe Krafteinwirkungen durch eine hohe Wandstärke an der Außenseite, also an den Wellrohrbergen, verringert werden können. Eine geringere Wandstärke im Bereich der Wellrohrtäler trägt zu einer hohen Biegeflexibilität bei. In bevorzugten Ausführungsformen des erfindungsgemäßen mehrschichtigen Wellrohraußenmantel ist die Wandstärke der Schutzschicht im Bereich der Wellrohrberge um 10 % bis 60 %, vorzugsweise um etwa 15 % bis 55 % größer ist als im Bereich der Wellrohrtäler.

Es kann sich im Rahmen der vorliegenden Erfindung auch als vorteilhaft erweisen, wenn die Schutzschicht zwischen zwei benachbarten Wellrohrbergen im Längsschnitt V-förmig ausgestaltet ist. Dadurch wird der erfindungsgemäßen mehrschichtigen Wellrohraußenmantel ebenfalls unempfindlicher gegenüber mechanischen Beschädigungen beispielsweise durch im Verfüllmaterial vorhandene größere Steine, die nicht mehr tief in die sich nach unten hin verjüngenden V-förmigen Wellentäler eindringen können. Dabei kann es besonders günstig sein, wenn die V-förmige Ausgestaltung der Schutzschicht zwischen zwei benachbarten Wellrohrbergen im Bereich des zwischen den benachbarten Wellrohrbergen angeordneten Wellrohrtälern zur Verbindungsschicht hin abgerundet ausgebildet ist. Dadurch werden zum einen Beschädigungen durch kleinere Steine, die bis an den Boden der Wellrohrtäler gelangen vermieden. Zum anderen wird dadurch die Kontaktfläche zwischen den V-förmigen Wellentälern und der Verbindungsschicht vergrößert, was zur Längswasserdichtheit beiträgt.

Es kann auch günstig sein, wenn die Schutzschicht zwischen zwei benachbarten Wellrohrtälern im Längsschnitt wannenförmig ausgestaltet ist. Diese Ausgestaltung gewährleistet, dass die dicke Materialstärke der Wellrohrberge über einen hohen Anteil der Rohrmantellänge vorhanden ist, was ebenfalls zur Beschädigungsunempfindlichkeit des erfindungsgemäßen mehrschichtigen Wellrohraußenmantels beiträgt. In besonders bevorzugten Ausführungsformen des erfindungsgemäßen mehrschichtigen Wellrohraußenmantels besitzt die wannenförmige Ausgestaltung der Schutzschicht zwischen zwei benachbarten Wellrohrtälern im Bereich des Wannenbodens eine größere Wandstärke als im Bereich der Wannenwände. Dadurch wird die hohe Wandstärke an den zur Wellrohraußenseite gerichteten Bereichen der gewellten äußeren Schutzschicht konzentriert, was zur hohen Beständigkeit des erfindungsgemäßen mehrschichtigen Wellrohraußenmantels gegenüber Beschädigungen von außen beiträgt.

In bevorzugten Ausführungsformen der vorliegenden Erfindung ist die gewellte äußere Schutzschicht aus einem Polymermaterial ausgebildet oder ein umfasst ein Polymermaterial. Vorzugsweise handelt es sich bei dem Polymermaterial um einen Thermoplast, insbesondere um ein Polyolefin. Erfindungsgemäß ist der Einsatz eines Polyethylens (bevorzugt HDPE, MDPE oder LDPE), eines Polypropylens oder eines vernetzten Polyethylens bevorzugt.

Die gewellte äußere Schutzschicht kann in einer besonders bevorzugten Ausführungsform der vorliegenden Erfindung aus einem vernetzten oder unvernetzten Polyethylen (PE) oder Polyethylen-Copolymeren, in einer vorteilhaften Weiterbildung aus geschäumtem Polyethylen mit einer Dichte von etwa 500 kg/m³ bestehen oder ein solches enthalten. Die gewellte äußere Schutzschicht ist in einem solchen Fall bei vergleichbarer Flexibilität im Vergleich zu einer ungeschäumten Schutzschicht robuster und besitzt eine verbesserte zur Wärmedämmwirkung.

Es kann auch günstig sein, wenn auch die Verbindungsschicht aus einem Polymermaterial ausgebildet ist oder ein Polymermaterial umfasst. Vorzugsweise handelt es sich bei dem Polymermaterial um einen Thermoplast, insbesondere um ein Polyolefin. Erfindungsgemäß ist der Einsatz eines Polyethylens (bevorzugt HDPE, MDPE oder LDPE) oder eines Polypropylens bevorzugt. Besonders bevorzugt ist die Verbindungsschicht als Polyethylenfolie ausgeführt.

Es kann auch hilfreich sein, wenn die Innenschicht im Wesentlichen über die gesamte Länge des Wellrohraußenmantels eine gleichbleibende Wandstärke aufweist. Dadurch wird die Beschädigungsresidenz des erfindungsgemäßen mehrschichtigen Wellrohraußenmantels weiter erhöht. Im Gegensatz dazu kann es aber auch hilfreich sein, wenn die Innenschicht im Bereich der Wellrohrtäler eine geringere Wandstärke aufweist als im Bereich der Wellrohrberge. Eine geringere Wandstärke der Innenschicht im Bereich der Wellrohrtäler trägt zur hohen Biegeflexibilität des erfindungsgemäßen mehrschichtigen Wellrohraußenmantels bei.

Es ist auch günstig, wenn die Innenschicht aus einem Polymermaterial ausgebildet oder ein Polymermaterial umfasst. Auch für die Innenschicht handelt es sich bei dem Polymermaterial um einen Thermoplast, insbesondere um ein Polyolefin. Erfindungsgemäß ist der Einsatz eines Polyethylens, eines Polypropylens oder eines vernetzten Polyethylens bevorzugt. Besonders bevorzugt ist die Innenschicht als Schaumplatte aus geschäumtem Polyethylen, insbesondere aus geschäumtem vernetzten Polyethylen, ausgeführt.

Die Ausführungen in Bezug auf den erfindungsgemäßen mehrschichtigen Wellrohraußenmantel gelten in Bezug auf die erfindungsgemäße Rohranordnung entsprechend.

In Bezug auf die erfindungsgemäße Rohranordnung kann es hilfreich sein, wenn der Raum zwischen dem mindestens einen Medienrohr und der Innenschicht zumindest teilweise durch mindestens eine Dämmschicht ausgefüllt ist. Auf diese Weise wird eine thermisch gedämmte Rohranordnung erhalten, die für den Einsatz in Nah- und Fernwärmenetzen besonders geeignet ist.

Dabei kann es von Vorteil sein, wenn die mindestens eine Dämmschicht ein PolyurethanSchaum (PUR-Schaum) ist. Der Schaum kann geschlossenzellig ausgebildet sein und behindert allein dadurch bereits den Weitertransport von Wasser im Falle einer Beschädigung des erfindungsgemäßen Wellrohraußenmantels. Vorzugsweise besitzt der PUR-Schaum eine Dichte (ca. 0,04 bis 0,10 kg/l) und eine geringe Wärmeleitfähigkeit (ca. 0,02 bis 0,04 W/mK). Auf diese Weise wird durch den Schaum eine gute Wärmedämmung erzielt, wodurch die Abkühlung des durch eine erfindungsgemäße Rohranordnung zu transportierenden Mediums wirkungsvoll reduziert werden kann.

In bevorzugten Ausführungsformen der erfindungsgemäßen Rohranordnung ist das mindestens eine Medienrohr ein Rohr aus einem Polymermaterial, insbesondere aus einem Thermoplast, insbesondere aus einem Polyolefin, hergestellt. Besonders bevorzugt ist das mindestens eine Medienrohr ein Rohr aus einem Polypropylen, einem Polyethylen oder einem vernetzten Polyethylen, wobei Rohre aus vernetztem Polyethylen besonders bevorzugt sind.

Es kann auch günstig sein, wenn die erfindungsgemäße Rohranordnung 2, 3 oder 4 Medienrohre im erfindungsgemäßen Wellrohraußenmantel umfasst. Hierdurch kann eine erfindungsgemäße Rohranordnung auf die Spezifikationen des Kunden oder die anzuwendende Technik angepasst werden. Auf diese Weise kann insbesondere die Transportkapazität einer solchen thermisch gedämmten Rohranordnung durch den gleichzeitigen Transport eines hohen Fluidvolumens durch mehrere Medienrohre erhöht werden und damit entsprechend auch die übertragene Wärmemenge.

Die erfindungsgemäße Rohranordnung kann wenigstens eine Sperrschicht an oder in der Schutzschicht, an oder in der mindestens einen Dämmschicht oder an oder in dem mindestens einem Medienrohr umfassen, die insbesondere die Diffusion von Sauerstoff oder Wasserdampf oder Kohlenwasserstoffen be- oder verhindern sollen. Diese Sperrschichten können insbesondere polymeres, metallisches oder anorganisches Material enthalten.

Alle Kunststoffmaterialien in dem erfindungsgemäßen mehrschichtigen Wellrohraußenmantel und in der erfindungsgemäßen Rohranordnung können dabei auch in Form von durch einen Recycling-Prozess gewonnenen Materialien eingesetzt werden.

Der erfindungsgemäße Wellrohraußenmantel und die erfindungsgemäße Rohranordnung werden bevorzugt durch einen Coextrusionsprozess, einen Postcoextrusionsprozess oder ein mehrstufiges Verfahren hergestellt. Ein solcher Coextrusionsprozess zur Herstellung des erfindungsgemäßen Wellrohraußenmantels oder der erfindungsgemäßen Rohranordnung kann insbesondere in mehreren Schritten durchführbar sein. So kann in einem ersten Schritt ein Medienrohr durch einen Extrusionsvorgang bereitgestellt werden, das in einem zweiten Schritt von einem Dämmmaterial umhüllt wird. Als Dämmmaterial kann beispielsweise eine dünne Platte eines geschäumten PUR-Polymermaterials um das Medienrohr herumgelegt werden und beispielsweise an den Stoßkanten verklebt oder verschweißt werden. Parallel dazu kann der erfindungsgemäße Wellrohraußenmantel coextrudiert werden. Dazu wird die Innenschicht mit darauf aufgeschweißter Verbindungsschicht durch einen Extruder geführt. Dabei wird die Schutzschicht extrudiert und ihre Wellenform durch einen Corrugator erzeugt. Anschließend kann das gedämmte Medienrohr in den erfindungsgemä-ßen Wellrohraußenmantel eingezogen werden. Es sind aber auch andere Techniken der Umhüllung des Medienrohrs mit einem Dämmmaterial möglich. Insbesondere ist es auch möglich, die Dämmschicht aus PUR-Schaum durch Reaktion der den PUR-Schaum bildenden Komponenten direkt auf dem Medienrohr, das bereits in den erfindungsgemäßen Wellrohraußenmantel eingebracht worden ist, zu erzeugen und so den Zwischenraum zwischen dem mindestens einen Mediumrohr und dem erfindungsgemäßen Wellrohraußenmantel im Zuge des Schäumprozesses mit der Dämmschicht zu füllen.

Der erfindungsgemäße mehrschichtige Wellrohraußenmantel und die erfindungsgemäße Rohranordnung sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Herstellung durch einen (Co-) Extrusionsprozess.

Im Folgenden soll die vorliegende Erfindung unter Bezugnahme auf die in den Figuren dargestellten Ausführungsformen im Detail erläutert werden. Dabei zeigen
- Figur 1: eine partielle Längsschnittdarstellung eines mehrschichtige Wellrohraußenmantels einer Ausführungsform der vorliegenden Erfindung;
- Figur 2: eine partielle Längsschnittdarstellung eines mehrschichtige Wellrohraußenmantels gemäß einer weiteren Ausführungsform der vorliegenden Erfindung; und
- Figur 3: eine partielle Längsschnittdarstellung einer erfindungsgemäßen Rohranordnung, die den in Fig. 2 dargestellten mehrschichtigen Wellrohraußenmantel umfasst.

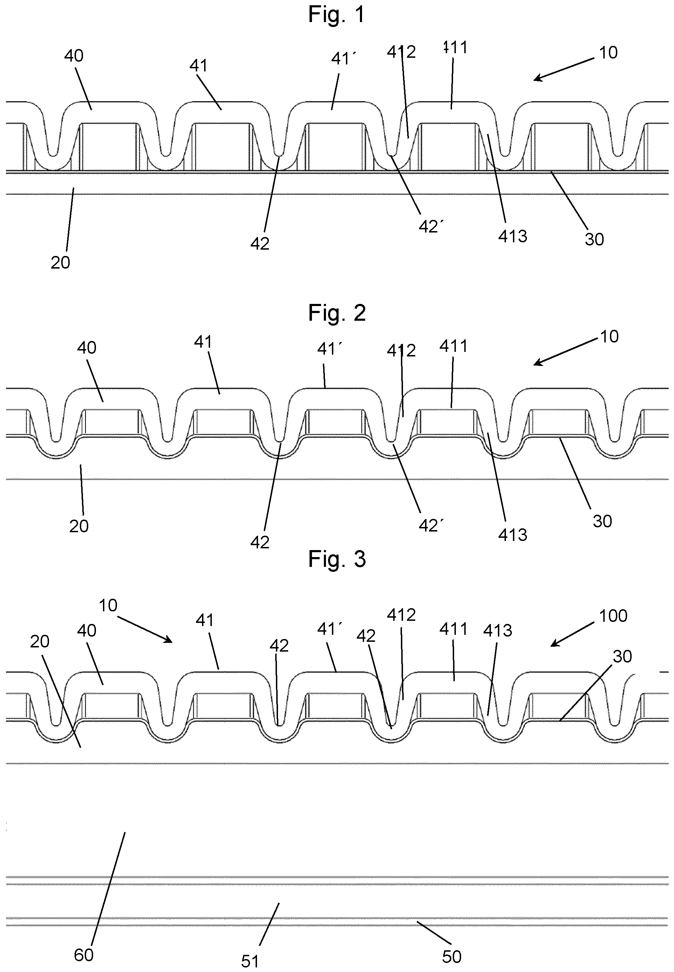

In der Fig. 1 ist ein Ausschnitt aus einer schematischen Längsschnittdarstellung eines mehrschichtige Wellrohraußenmantels 10 zur Aufnahme wenigstens eines Medienrohrs 50 zur Führung eines Fluids gemäß einer Ausführungsform der vorliegenden Erfindung gezeigt. Gemäß der in Fig. 1 dargestellten Ausführungsform umfasst der erfindungsgemäße mehrschichtige Wellrohraußenmantel 10 eine Innenschicht 20; eine auf der Innenschicht 20 angeordnete und mit der Innenschicht 20 zumindest abschnittsweise verbundene Verbindungsschicht 30; und eine auf der Verbindungsschicht 30 angeordnete, gewellte äußere Schutzschicht 40. Durch ihre Wellenform weist die Schutzschicht 40 eine Vielzahl an Wellrohrberge 41, 41' und Wellrohrtäler 42, 42' auf. Die Innenschicht 20 ist in der gezeigten Ausführungsform vollflächig mit der Verbindungsschicht 30 verschweißt, während die Schutzschicht 40 im Bereich der Wellrohrtäler 42, 42' umlaufend mit der Verbindungsschicht 30 verschweißt ist.

In der in Fig. 1 gezeigten Ausführungsform ist die Schutzschicht 40 im Bereich der Wellrohrberge 41, 41' dicker ausgebildet als im Bereich der Wellrohrtäler 42, 42'. Dabei ist die Wandstärke der Schutzschicht 40 im Bereich der Wellrohrberge 41, 41' um etwa 50 % größer ist als im Bereich der Wellrohrtäler 42, 42'. So ist die Schutzschicht 40 gemäß Fig. 1 im Bereich der Wellrohrberge 41, 41' etwa 3 mm dick, während die Wanddicke der Schutzschicht 40 im Bereich der Wellrohrtäler 42, 42" etwa 2 mm beträgt. Diese hohe Wandstärke an der Außenseite verringert die Gefahr von Beschädigungen des erfindungsgemä-ßen mehrschichtigen Wellrohraußenmantels 10 durch andauernde hohe Krafteinwirkungen. Zusätzlich trägt die geringere Wandstärke im Bereich der Wellrohrtäler 42, 42' zu einer hohen Biegeflexibilität bei.

Zwischen zwei benachbarten Wellrohrbergen 41, 41' ist die Schutzschicht 40 im Längsschnitt V-förmig ausgestaltet. Größere, im Verfüllmaterial vorhandene Steine können so nicht mehr tief in die sich nach unten hin verjüngenden V-förmigen Wellentäler eindringen und dort die Schutzschicht 40 beschädigen. Dabei ist die V-Form der Wellrohrtäler 41, 41' zur Verbindungsschicht hin abgerundet ausgebildet. Dadurch werden zum einen Beschädigungen durch kleinere Steine, die bis an den Boden der Wellrohrtäler gelangen vermieden.

Zwischen zwei benachbarten Wellrohrtälern 42, 42' ist die Schutzschicht 40 im Längsschnitt wannenförmig ausgestaltet ist. Diese Wannenform führt dazu, dass die dicke Materialstärke der Wellrohrberge 42, 42' über einen hohen Anteil der Rohrmantellänge vorhanden ist, was die Unempfindlichkeit des erfindungsgemäßen mehrschichtigen Wellrohraußenmantels 10 gegenüber Beschädigungen von außen weiter erhöht. Die Wandstärke der Schutzschicht 40 ist dabei im Bereich des Wannenbodens 411 größer als im Bereich der sich an den Wannenbodens 411 anschließenden Wannenwände 412, 413.

Gemäß der in Fig. 1 gezeigten Ausführungsform ist die gewellte äußere Schutzschicht 40 aus Polyethylen hoher Dichte (HDPE) hergestellt.

Die Verbindungsschicht 30 ist in der gezeigten Ausführungsform eine Polyethylenfolie mit einer Dicke von 70 µm.

In dem in Fig. 1 dargestellten erfindungsgemäßen mehrschichtigen Wellrohraußenmantel 10 ist die Innenschicht 20 als Schaumplatte aus geschäumtem vernetztem Polyethylen ausgebildet und besitzt im Wesentlichen über die gesamte Länge des erfindungsgemäßen Wellrohraußenmantels 10 eine gleichbleibende Wandstärke. Die Wandstärke der Innenschicht 20 beträgt dabei 5 mm.

In Fig. 2 ist eine weitere Ausführungsformen des erfindungsgemäßen mehrschichtigen Wellrohraußenmantel 10 gezeigt. Um Wiederholungen zu vermeiden, werden daher im Folgenden nur Unterschiede zu der in Fig. 1 dargestellten Ausführungsform des erfindungsgemäßen mehrschichtigen Wellrohraußenmantels 10 beschrieben. Die Ausführungsformen zu Fig. 1 gelten auch für die Ausführungsform gemäß Fig. 2 entsprechend. Gleiche Elemente sind in den Abbildungen durch identische Bezugszeichen gekennzeichnet.

In Fig. 2 ist eine weitere Ausführungsform des erfindungsgemäßen mehrschichtigen Wellrohraußenmantels 10 in einer schematischen partiellen Längsschnittdarstellung gezeigt. Die in Fig. 2 dargestellte Ausführungsform unterscheidet sich von der zu Fig. 1 beschriebenen Ausführungsform lediglich hinsichtlich der Verteilung der Wandstärke der Innenschicht 30 in Längsrichtung des Wellrohraußenmantels 10. Dabei weist die Innenschicht 20 im Bereich der Wellrohrtäler 42, 42' eine um etwa ein Drittel geringere Wandstärke auf als im Bereich der Wellrohrberge 41, 41'. Durch die geringere Wandstärke der Innenschicht 20 im Bereich der Wellrohrtäler 41, 41' wird die hohen Biegeflexibilität des erfindungsgemäßen mehrschichtigen Wellrohraußenmantels 10 weiter verbessert.

Figur 3 zeigt schließlich eine erfindungsgemäße Rohranordnung 100, die den in Fig. 2 dargestellten mehrschichtigen Wellrohraußenmantel 10, ein darin aufgenommenes Medienrohr 50 zur Führung eines Fluids sowie eine Dämmschicht 60, die den Zwischenraum zwischen dem Medienrohr 50 und der Innenschicht 20 zumindest teilweise durch mindestens eine Dämmschicht 60 ausfüllt. Dadurch ist die Rohranordnung 100 in Form einer thermisch gedämmten Rohranordnung 100 ausgebildet.

Gemäß der in Fig. 3 gezeigten Ausführungsform das Medienrohr 50 als Rohr aus vernetztem Polyethylen (PE-X) ausgebildet. Es umfasst ein Lumen 51 zur Aufnahme, Speicherung oder Leitung des Fluids.

An der Außenoberfläche des Medienrohrs 50 ist eine Dämmschicht 60 angeordnet, die mit ihrer Innenoberfläche an der Außenoberfläche des Medienrohrs 50 anliegt. Die Dämmschicht 60 ist Schicht aus einem Polyurethan ausgebildet. Dabei wurde die Dämmschicht 60 durch eine Polymerisationsreaktion der das Polyurethan bildenden Komponenten unter Aufschäumen direkt auf dem Medienrohr 50 erzeugt. Alternativ dazu kann die Dämmschicht 60 auch als dünne Platte aus dem Polyurethanschaum ausgebildet sein, die um das Mediumrohr 50 herumgelegt und an ihren Stoßkanten in axialer und in radialer Richtung verklebt oder verschweißt wird.

Es versteht sich, dass die voranstehend erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die vorliegende Erfindung wurde exemplarisch unter Bezugnahme auf die in den Figuren dargestellten Ausführungsformen im Detail erläutert. Es versteht sich, dass die vorliegende Erfindung nicht auf diese Ausführungsformen beschränkt ist. Vielmehr ergibt sich der Umfang der vorliegenden Erfindung aus den beigefügten Ansprüchen.

## Patentansprüche

1. Mehrschichtiger Wellrohraußenmantel (10) zur Aufnahme wenigstens eines Medienrohrs (100) zur Führung eines Fluids, umfassend:
eine Innenschicht (20);
eine auf der Innenschicht (20) angeordnete und mit der Innenschicht (20) zumindest abschnittsweise verbundene Verbindungsschicht (30); und
eine auf der Verbindungsschicht (30) angeordnete, gewellte äußere Schutzschicht (40), die Wellrohrberge (41, 41') und Wellrohrtäler (42, 42') aufweist, wobei die Schutzschicht (40) im Bereich der Wellrohrtäler (42, 42') mit der Verbindungsschicht (30) verbunden ist.

2. Mehrschichtiger Wellrohraußenmantel (10) nach Anspruch 1, **dadurch gekennzeichnet, dass** die Wandstärke der Schutzschicht (40) im Bereich der Wellrohrberge (41, 41') größer ist als im Bereich der Wellrohrtäler (42, 42').

3. Mehrschichtiger Wellrohraußenmantel (10) nach einem der Ansprüche 1 oder 2, **dadurch gekennzeichnet, dass** die Schutzschicht (40) zwischen zwei benachbarten Wellrohrbergen (41, 41') im Längsschnitt V-förmig ausgestaltet ist.

4. Mehrschichtiger Wellrohraußenmantel (10) nach Anspruch 3, **dadurch gekennzeichnet, dass** die V-förmige Ausgestaltung der Schutzschicht (40) zwischen zwei benachbarten Wellrohrbergen (41, 41') im Bereich des zwischen den benachbarten Wellrohrbergen (41, 41') angeordneten Wellrohrtälern (42) zur Verbindungsschicht (30) hin abgerundet ausgebildet ist.

5. Mehrschichtiger Wellrohraußenmantel (10) nach einem der Ansprüche 1 bis 4, **dadurch gekennzeichnet, dass** die Schutzschicht (40) zwischen zwei benachbarten Wellrohrtälern (42, 42') im Längsschnitt wannenförmig ausgestaltet ist.

6. Mehrschichtiger Wellrohraußenmantel (10) nach Anspruch 5, **dadurch gekennzeichnet, dass** die wannenförmige Ausgestaltung der Schutzschicht (40) zwischen zwei benachbarten Wellrohrtälern (42, 42') im Bereich des Wannenbodens (411) eine größere Wandstärke besitzt als im Bereich der Wannenwände (412, 413).

7. Mehrschichtiger Wellrohraußenmantel (10) nach einem der Ansprüche 1 bis 6, **dadurch gekennzeichnet, dass** die Innenschicht (20) im Wesentlichen über die gesamte Länge des Wellrohraußenmantels (10) eine gleichbleibende Wandstärke aufweist.

8. Mehrschichtiger Wellrohraußenmantel (10) nach einem der Ansprüche 1 bis 7, **dadurch gekennzeichnet, dass** die Innenschicht (20) im Bereich der Wellrohrtäler (42, 42') eine geringere Wandstärke aufweist als im Bereich der Wellrohrberge (41, 41').

9. Mehrschichtiger Wellrohraußenmantel (10) nach einem der Ansprüche 1 bis 8, **dadurch gekennzeichnet, dass** die Verbindung der Innenschicht (20) mit der Verbindungsschicht (30) und die Verbindung der Verbindungsschicht (30) mit der Schutzschicht (40) unabhängig voneinander als Verschweißung und/oder Verklebung ausgestaltet ist.

10. Rohranordnung (100), umfassend einen mehrschichtigen Wellrohraußenmantel (10) nach einem der Ansprüche 1 bis 8 und mindestens ein darin aufgenommenes Medienrohr (50) zur Führung eines Fluids.

11. Rohranordnung (100) nach Anspruch 10, **dadurch gekennzeichnet, dass** der Raum zwischen dem mindestens einen Medienrohr (100) und der Innenschicht (20) zumindest teilweise durch mindestens eine Dämmschicht (60) ausgefüllt ist.
